(19) Europäisches Patentamt / European Patent Office / Office européen des brevets

(11) **EP 3 452 349 B1**

(12) **EUROPEAN PATENT SPECIFICATION**

(45) Date of publication and mention
of the grant of the patent:
**12.01.2022 Bulletin 2022/02**

(51) Int Cl.:
**B60W 10/02** *(2006.01)* **B60W 30/18** *(2012.01)*
**B60W 50/00** *(2006.01)* **B60K 23/08** *(2006.01)*

(21) Application number: **17727014.7**

(22) Date of filing: **04.05.2017**

(86) International application number:
**PCT/US2017/031045**

(87) International publication number:
**WO 2017/192842 (09.11.2017 Gazette 2017/45)**

(54) **SYSTEMS AND METHODS FOR VEHICLE TO VEHICLE COMMUNICATION AND ALL WHEEL DRIVE DISCONNECT**

SYSTEME UND VERFAHREN FÜR FAHRZEUG-ZU-FAHRZEUG-KOMMUNIKATION UND AUSSCHALTUNG VON ALLRADANTRIEB

SYSTÈMES ET PROCÉDÉS POUR UNE COMMUNICATION DE VÉHICULE A VÉHICULE ET DÉCONNEXION DE TRACTION INTÉGRALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.05.2016 US 201662331581 P**

(43) Date of publication of application:
**13.03.2019 Bulletin 2019/11**

(73) Proprietor: **Linamar Corporation**
**Guelph, Ontario N1H 1C5 (CA)**

(72) Inventors:
• **EKONEN, Todd R.**
**Brighton, MI 48114 (US)**
• **HOLLAND, Mitchell**
**Royal Oak, MI 48073 (US)**
• **BROWN, William, Blake**
**Huntsville, AL 35801 (US)**
• **GRIFFITH, Matt**
**Orion Township, MI 48359 (US)**

(74) Representative: **Glawe, Delfs, Moll**
**Partnerschaft mbB von**
**Patent- und Rechtsanwälten**
**Postfach 13 03 91**
**20103 Hamburg (DE)**

(56) References cited:
**DE-A1-102011 116 112 GB-A- 2 357 159 US-A1- 2013 274 952**

**Description**

## TECHNICAL FIELD

Example embodiments relate to a communications and control system in a vehicle for determining the activation of an all wheel drive system.

## BACKGROUND

All wheel drive (AWD) disconnect systems are designed to improve fuel efficiency for an all wheel drive vehicle by disconnecting the major rotating driveline components of an AWD driveline assembly when the performance or benefits of the AWD driveline assembly are not needed. The AWD driveline assembly is preferably connected only if it will likely provide a performance benefit, such as to improve the operation of the vehicle in slippery conditions.

The AWD connect/disconnect system may wait until an undesirable event occurs, such as a wheel slip, and then react by commanding the AWD to connect. Other methods exist for determining or predicting when a connected state of the AWD system will be beneficial based on information received from sensors onboard the vehicle, For example, U.S. patent No. 8,095,287 to Beechie describes the use of ambient temperatures and windshield wiper sensor information to determine whether to actuate an AWD system. New communication systems and protocols, such as vehicle to vehicle (V2V) communications and vehicle to infrastructure (V2I) communications, also allow a vehicle to receive information from other vehicles or from structures on or near a road. US 2013/274 952 A discloses a predictive powertrain control, receiving external messages about traffic and road conditions. DE 10 2011 116 112 A discloses to rely on at least one of distance, time to collision and speed difference for actuating an emergency braking system.

## SUMMARY

According to one embodiment of the present invention there is provided a method for determining a connection state of an all wheel drive (AWD) assembly in a vehicle. The method includes receiving by a vehicle, a message indicative of a hazard and a hazard location; determining a distance to the hazard location from the vehicle; in response to the distance to the hazard location being below a first threshold distance, setting an all wheel drive (AWD) state for an AWD assembly in the vehicle to a connect state; in response to the distance to the hazard location being above the first threshold, determining a time to the hazard location for the vehicle; and in response to the time to the hazard location being below a threshold AWD connection time, setting the AWD state to the connect state.

According to another embodiment there is provided a controller for determining a connection state of all wheel drive assembly in a vehicle. The controller includes a memory; a wireless communications subsystem; and a processor configured to: receive a message indicative of a hazard and a hazard location through the wireless communications subsystem; determine a distance to the hazard location from the vehicle; in response to the distance to the hazard location being below a first threshold distance, set an all wheel drive (AWD) state for an AWD assembly in the vehicle to a connect state; in response to the distance to the hazard location being above the first threshold, determine a time to the hazard location for the vehicle; and in response to the time to the hazard location being below a threshold AWD connection time, set the AWD state to the connect state.

## BRIEF DESCRIPTION OF THE DRAWINGS

Advantages of the present invention will be readily appreciated as the same becomes better understood by reference to the following detailed description when considered in connection with the accompanying drawings wherein:

Figure 1 is a diagram illustrating a vehicle in accordance with one embodiment of the present invention and a roadway environment of the vehicle;
Figure 2 is a block diagram illustrating a vehicle in accordance with one embodiment of the present invention;
Figure 3 is a block diagram illustrating a MAS controller and a portion of vehicle control system in accordance with one embodiment of the present invention;
Figures 4 and 5 are flow charts of methods for determining a connection state of an all wheel drive (AWD) assembly in the vehicle;
Figure 6 is a diagram illustrating the vehicle in accordance with one embodiment of the present invention and the roadway environment of the vehicle;
Figure7 is a flow chart of a method for determining an AWD disconnect state; and
Figure 8 is a flow chart of a method for receiving messages by a vehicle in accordance with one embodiment of the present invention.

Like reference numerals are used throughout the Figures to denote similar elements and features.

## DETAILED DESCRIPTION OF EXAMPLE EMBODIMENTS

The present invention is directed to a vehicle and a vehicle controller which is part of an all wheel drive (AWD) connect/disconnect system. An AWD connect/disconnect system is generally designed to improve fuel efficiency by disconnecting major rotating driveline components when the performance or benefits of AWD are not needed. When AWD components are connected, the vehicle typically has better traction and handling characteristics in certain types of conditions. In a connected state, however, fuel efficiency is generally lower due, for example, to parasitic losses. According to the embodiments described herein, the vehicle controller operates to predict when it may be necessary or beneficial to connect components in the AWD driveline assembly based on one or more messages received by the vehicle about the road and its environment. The messages may contain information regarding road conditions, weather conditions, hazards on the road, features of the road, and/or events experienced by other vehicles, any of which may create a situation in which actuating or connecting components in the AWD driveline assembly may be beneficial for the operation of the vehicle. This AWD state is referred to herein as the "connected state". Otherwise, if it is likely not beneficial to connect components in the AWD driveline assembly, it is described herein as a "disconnected" state.

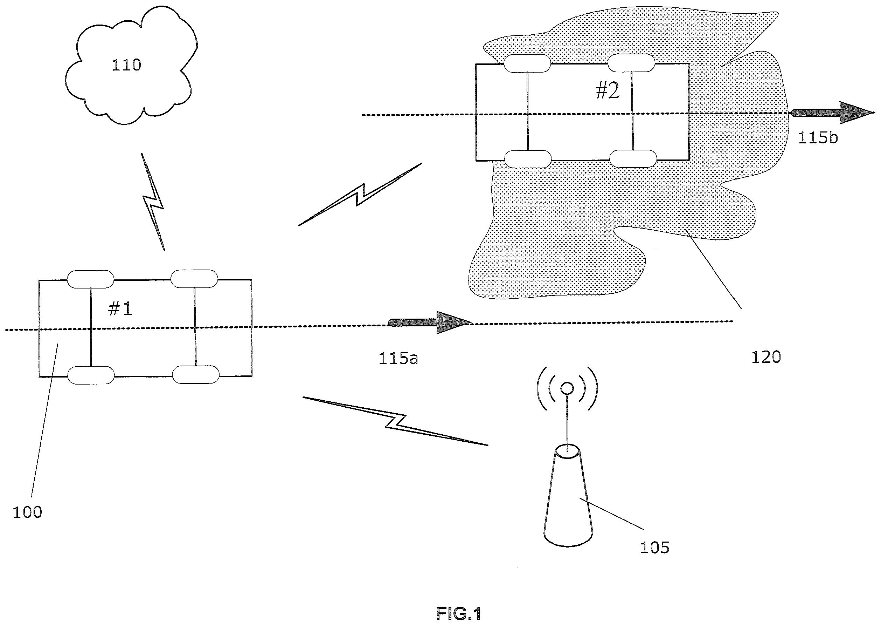

An example environment for the operation of a vehicle 100 according to the present invention is shown in Figure 1. The vehicle 100, also labelled as vehicle #1 in Figure 1, is configured to support one or more types of wireless communications. The messages received by the vehicle 100 may be sent by other vehicles, such as vehicle #2 in Figure 1. Vehicle #2 in Figure 1 may or may not operate according the embodiments described herein but vehicle #2 is at least configured to send wireless communications with the information described herein. The messages received by vehicle 100 may be sent by other structures on or near the roadway, such as a light signal or communication tower, represented by structure 105 in Figure 1. These types of communications are often referred to as vehicle to vehicle (V2V) communications and vehicle to infrastructure (V2I) communications, respectively, or collectively, V2X communications. Finally, the vehicle 100 may also receive messages about road conditions or features of the road through other wireless communications networks 110, including cellular networks, wireless local area networks such as WiFi™ networks, short range wireless networks such as Bluetooth™ networks, or global positioning system (GPS) networks.

As shown in the example of Figure 1 by arrows 115a, 115b, vehicles #1 and #2 may be travelling in the same general direction. As vehicle #2 encounters an icy patch 120, it may experience a wheel slip event. As a result, vehicle #2 may transmit or broadcast a message containing information about the slip event and the location of vehicle #2. Upon receipt of the message, and according to methods described herein, vehicle 100 determines whether it is beneficial to set its AWD assembly to a connected state in order to be prepared to handle the same road conditions or "hazard" which caused the slip event for vehicle #2. This determination by the vehicle 100 is based on the distance from the vehicle 100 to these road conditions or hazard, and the speed of the vehicle. In some embodiments, the vehicle 100 also may determine the angle between the vehicle's path of travel and the hazard and this angle also may factor into the determination made by the vehicle 100 for its AWD state. In some embodiments, the information received and processed by vehicle 100 may be combined with other information gathered from its internal sensors and components to determine whether the AWD state should be connected or disconnected.

It will be appreciated that the messages transmitted by vehicle #2 may include information regarding one or more features of the road, weather conditions, road conditions, or events, any of which indicate a hazard warranting an AWD connected state. Such information will be referred to herein as an "AWD trigger" since this information may indicate a scenario or "hazard" for which actuation of the AWD assembly may be beneficial. Vehicle #2 may transmit a message containing information about a slip event as described above and the same message or a separate message may contain information indicating an icy road condition exists. Vehicle #2 may determine an icy road condition exists based on information gathered from its sensors and/or information received from other vehicles, structures or networks. In some embodiments, vehicle #2 may retransmit a message it receives from another vehicle (not shown) which includes information of an AWD trigger and a location of the hazard. The vehicle 100 (vehicle #1) may receive multiple messages about one or more potential AWD triggers and hazards including, for example, a message from structure 105 indicating a change in grade, or a particular type of road, such as a gravel road. The message sent by the structure 105 includes either the location of the structure 105 or more particularly, the location of the hazard. The vehicle 100 may receive a message via the wireless communications network 110 about other AWD triggers and hazards such as weather conditions and features of the road.

In some cases, vehicles #1 and #2 do not need to be travelling in the same direction. A message transmitted by vehicle #2 about an AWD trigger and hazard location still may be relevant to vehicle #1 even if vehicle #2 is travelling in the opposite direction from that shown in Figure 1. Depending on the distances between the vehicles and the hazard, an icy road condition experienced by vehicle #2 still may be relevant to the AWD state for vehicle #1. A change in course for vehicle #1, such as a turn at an intersection, also may bring vehicle #1 into or out of the range of the hazard location for the AWD trigger sent by vehicle #2.

Messages transmitted by vehicles #1, #2, and structure 105 may adhere to the dedicated short range communication (DSRC) standard which is a two-way, short to medium range communications protocol for data transmissions in safety applications. Messages may be received typically within a range of about 1000 feet. DSRC based communications feature very low latency, on the order of milliseconds, fast network acquisition, and high reliability and tolerance to multipath transmissions in roadway environments. DSRC communications are intended to work for vehicles operating at high speeds with an ability to prioritize safety messages and performance abilities that are more immune to extreme weather conditions such as rain, fog, snow etc. DSRC communications may also offer the secure and private transmission or exchange of messages. Messages transmitted and received by vehicles and infrastructure may adhere to the DSRC standard or may be supported by other short range, low latency wireless communications protocols.

Messages transmitted according to the DSRC standard may include a basic safety message (BSM) which contains information about the sending entity such as its location, heading, and speed, as well as a time stamp of the transmitted message. The BSM may be transmitted regularly by each vehicle as a beacon signal.

According to embodiments described herein, vehicles may operate to transmit additional information regarding the status of the vehicle, the road, or events encountered by the vehicle which, as described above, are treated as AWD triggers. In one embodiment, the AWD trigger information may be included as part of the BSM, as part of an extended safety message (ESM), or as part of another message type defined for V2X communications where that message also contains the location of the vehicle and/or the location of the hazard. These messages may be transmitted periodically by each vehicle and/or in response to new AWD trigger information. The AWD trigger information may be encoded in a specific message field, using pre-assigned bit fields or values, or in a predetermined message format.

The AWD trigger information may indicate events experienced by the vehicle transmitting the message such as a wheel slip event, a yaw event (wherein the vehicle's actual yaw rate exceeds a theoretical yaw rate), an anti-lock braking system (ABS) or sudden braking event, a connected or locked AWD state, an accelerator pedal event exceeding a threshold, a change in throttle rate map (such as winter driving mode) due to poor road conditions, a change in state of a torque transfer device due to upcoming road conditions, or a windshield wiper activation. The AWD trigger information may indicate conditions experienced or detected by the vehicle such as a steep grade detected based on throttle position as compared to engine load, a rough road condition as determined by an accelerometer of the vehicle, or a coefficient of friction calculated by the vehicle. The message may indicate AWD triggers such as permanent or semi-permanent conditions or features of the road, including a gravel road, a dirt road, a steep road grade, or a sharp curvature of the road. The message may indicate AWD triggers such as transient conditions or weather conditions including an icy road condition, a snowy road condition, or a rainy or wet road condition. Messages received by the vehicle 100 from the one or more communications networks 110 and/or from infrastructure, such as the structure 105, may include similar AWD trigger information about permanent or semi-permanent conditions or features of the road, map data, and weather conditions, as well as locations for these hazards.

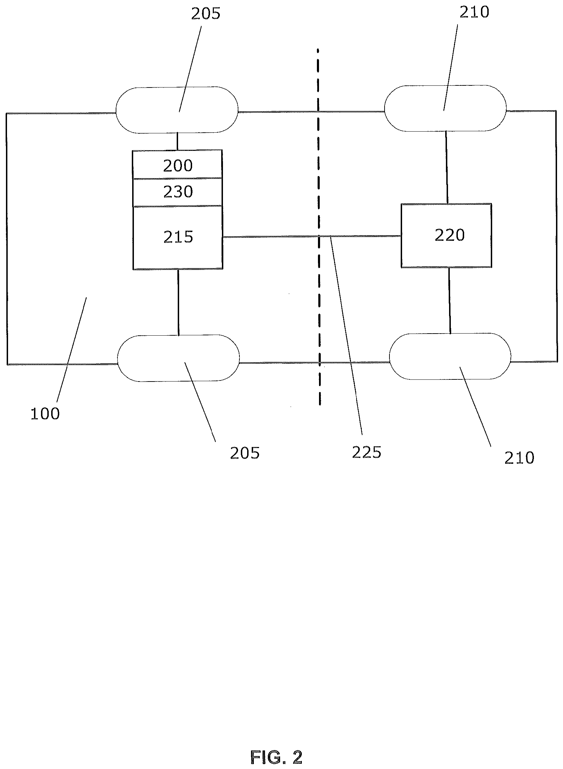

Figures 2, 3, 4 and 5 illustrate the vehicle 100, a message-AWD state controller or "MAS" controller 200, and methods executed by the MAS controller 200 based on one or more received messages to determine an AWD state for the AWD driveline assembly of the vehicle 100. As illustrated in the block diagram of Figure 2, the vehicle 100 has a first set of wheels 205 and a second set of wheels 210. The vehicle includes an all wheel drive (AWD) driveline assembly with a front driveline assembly 215 and a rear driveline assembly 220. The front driveline assembly 215 may include, among other components, an engine, a transmission and a power transfer unit (PTU). The PTU includes an output to transmit torque through a propeller shaft 225 to the rear driveline assembly 220. An all wheel drive (AWD) coupling assembly (not shown) is provided as part of the rear driveline assembly 220 to control coupling and torque distribution between the front and rear driveline assemblies 215, 220. A vehicle supervisory controller 230 is in communication with the MAS controller 200 and with the components in the front and rear driveline assemblies 215, 220. The supervisory controller 230 may also be in communication with one or more sensors (not shown) located throughout the vehicle 100.

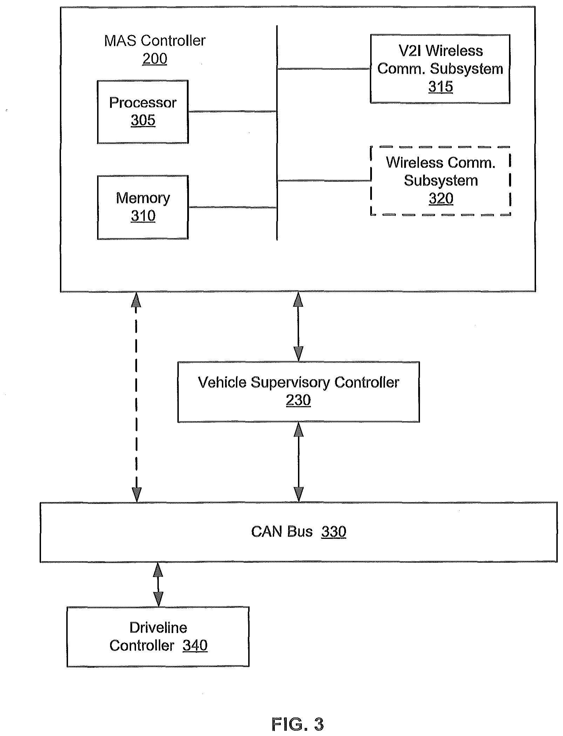

Figure 3 illustrates a block diagram of the MAS controller 200 and a portion of the control system for the vehicle 100. The MAS controller 200 may be a separate component, such as a programmable chip, application specific integrated circuit, or dedicated circuit board assembly or module. The MAS controller may be part of the vehicle supervisory controller 230, or the vehicle supervisory controller 230 may be configured to execute the functions of the MAS controller 200. The MAS controller 200 includes a processor 305 and a memory 310 which is configured to store and execute instructions for methods for determining a connection state of an AWD assembly in the vehicle 100 as described herein. The MAS controller 200 includes at least one wireless communications subsystem, such as a V2X wireless communications subsystem 315 for receiving messages from other vehicles or roadway structures 105. The MAS controller 200 may include additional wireless communications subsystems 320 for receiving messages from the wireless communication networks 110. The V2X subsystem 315 may be configured to receive, or transmit and receive, DSRC communications or other short-range, low latency, safety oriented communication messages as described above. One or more wireless subsystems 320 may be included for supporting cellular communications, wireless local area network communications, such as WiFi™, short range wireless network communications such as Bluetooth™ networks, or GPS communications. The MAS controller 200 may be configured to determine a location or an approximate location of the vehicle 200 based on information received from a GPS network or this action may be performed by the vehicle supervisory controller 230.

The MAS controller 200 may be part of the vehicle supervisory controller 230 or, in some embodiments, the MAS controller 200 may be connected to the vehicle supervisory controller 230. In some embodiments, the connection between the MAS controller 200 and the vehicle supervisory controller 230 may be part of a vehicle communications bus such as a controller area network (CAN) bus 330. The MAS controller 200 also may be connected directly, or via the CAN bus 330, to a driveline controller 340. The driveline controller 340 operates to control the connection state and other aspects of the front and rear driveline assemblies 215, 220 including the actuation of the AWD components.

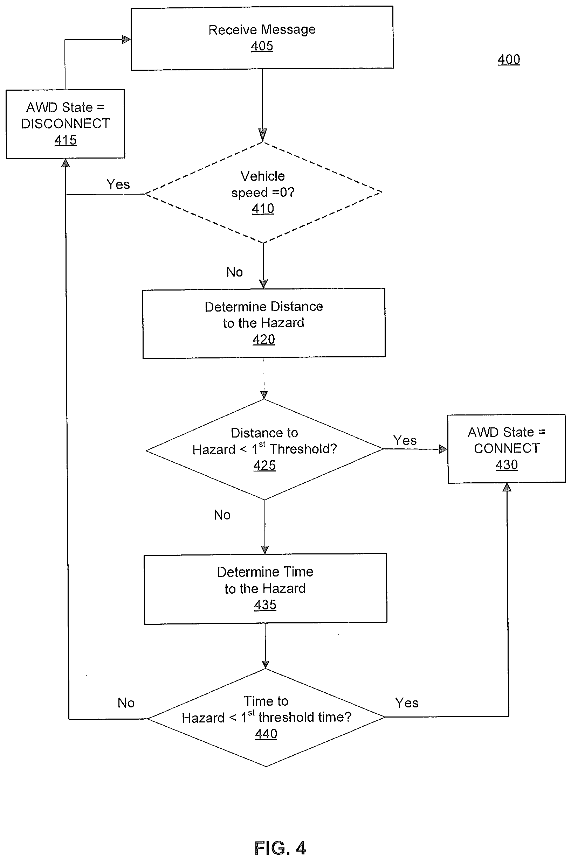

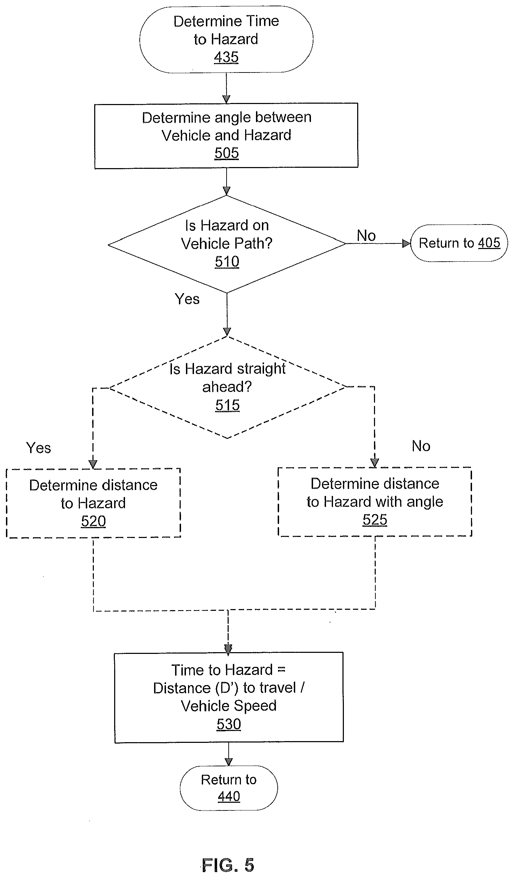

Figures 4 and 5 illustrate methods 400, 500 of determining the AWD state for the vehicle 100. The method 400 starts with receiving 405 a message, as described above, which contains AWD trigger information and a location, such as GPS coordinates, of the hazard. The message may be received by the vehicle 100 and immediately processed by the MAS controller 200 or, in some embodiments, the message may be stored in a buffer or queue in memory 310 and retrieved at step 405 for processing. Optionally, if the MAS controller 200 determines 410 that the vehicle 100 is not moving and the vehicle speed is zero, the method 400 may end to eliminate processing time. Alternatively, the MAS controller 200 may set the AWD state to DISCONNECT and return to step 405 to process the next message.

Otherwise, for each message, the MAS controller 200 determines 420 a distance between the vehicle 100 and the location of the hazard as indicated in the message. In one embodiment, the distance (D) between the vehicle 100 and the hazard location is determined by an equirectangular approximation using the GPS coordinates of the vehicle 100 and the GPS coordinates of the hazard. The distance may be determined according to the equation (1) below where $R_E$ is the mean radius of the earth (6,371 km) and X and Y are defined by equations (2) and (3).

$$(1)\ D = R_E * \sqrt{X^2 + Y^2}$$

$$(2)\ X = \Delta\lambda * \cos(\frac{\varphi_V + \varphi_H}{2}),$$

and

$$(3)\ Y = \Delta\varphi$$

In the above equations, $\varphi_V$ represents the latitude of the vehicle 100 (in radians); $\lambda_V$ represents the longitude of the vehicle 100 (in radians); $\varphi_H$ represents the latitude of the hazard (in radians); and $\lambda_H$ represents the longitude of the hazard (in radians).

The method 400 includes determining an AWD state based on a comparison 425 of the distance (D) between the vehicle 100 and the hazard, and a first threshold distance. The first threshold distance may be set based on a margin of error in determining locations based on GPS coordinates, as well as the time needed for AWD components to be actuated or connected and operable in the vehicle 100. Thus, for example, if the margin of error for each location is about 4 metres, the first threshold distance may be set to 8 metres. If the distance to the hazard is at or below the first threshold distance, the AWD state is set 430 to CONNECT. The AWD state determined by the MAS controller 200 may be communicated to the driveline controller 340 via the CAN bus 330 in order to actuate and connect the components in the AWD driveline assembly. In other embodiments, the AWD state determined by the MAS controller 200 may be provided to the vehicle supervisory controller 230. The vehicle supervisory controller 230 makes a final determination regarding the AWD state based on the state indicated by the MAS controller 200, as well as other conditions or information received by the vehicle supervisory controller 230 from other components and sensors in the vehicle.

If the distance to the hazard is not within the first threshold distance, the MAS controller 200 determines 435 an approximate time for the vehicle 100 to travel and reach the hazard location. In one embodiment, this time may be determined based on a simple calculation of the distance (D) divided by the vehicle speed. The MAS controller 200 determines the AWD state based on a comparison 440 of the time for the vehicle 100 to reach the hazard, and a first threshold time. The first threshold time may correspond to the time delay associated with the AWD driveline assembly transitioning from a disconnected state to being operable in a connected stated, such as approximately 7 seconds, depending on the vehicle 10. If the time for the vehicle 100 to reach the hazard is below this AWD connection time, the AWD state is set 430 to CONNECT as described above. Otherwise, the AWD state is set 415 to DISCONNECT and the method 400 may end or return to step 405 to process the next message.

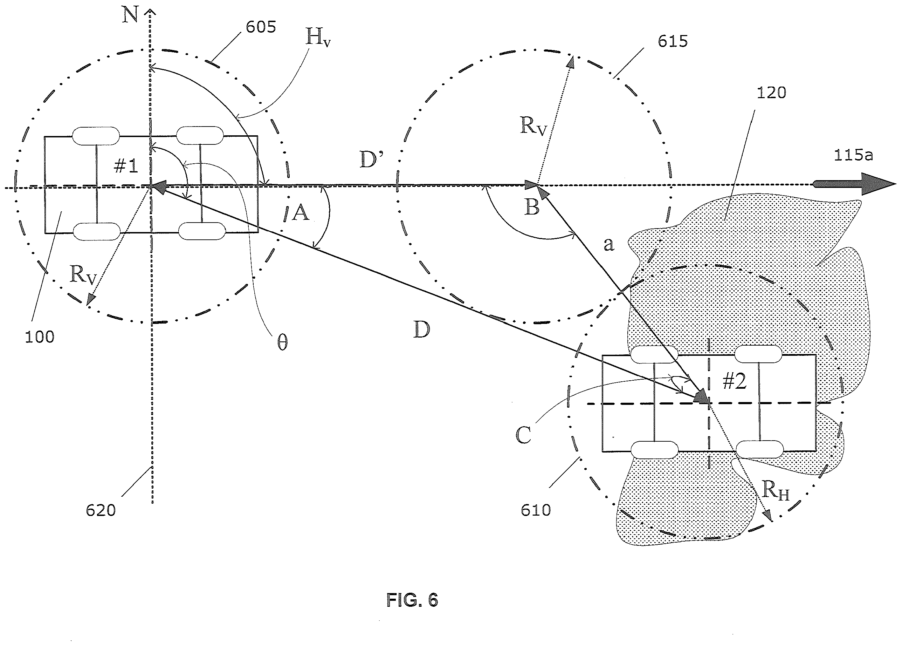

Figure 5 illustrates a further embodiment for a method 435 for determining the time for the vehicle 100 to travel and encounter the hazard location. This determination is made based on an angle between a heading of the vehicle 100 and the hazard location, the distance (D) to the hazard location from the vehicle 100, and the first threshold distance as described above. Figure 5 will be described with reference to Figure 6 which illustrates example angles and distances between the vehicle 100 (labelled also as vehicle #1) and a hazard location. Figure 6 illustrates an example embodiment similar to Figure 1 in which vehicle #1 is travelling in the direction of arrow 115a and has received a message from vehicle #2 about AWD triggers, such as a wheel slip event and/or the icy patch 120 on the road. The current location of vehicle #1 is illustrated by circle 605 which is based on a radius ($R_V$) equal to the margin of error associated with the location of the vehicle 100. In this example, the location of the hazard is deemed to be the same as the location of vehicle #2 which has transmitted one or more messages about the AWD trigger. The location of the hazard is illustrated by circle 610 which is based on a radius ($R_H$) equal to the margin of error associated with the location of vehicle #2. Circle 615 indicates a future position of the vehicle 100 when it is expected to encounter the hazard location within the first threshold distance. The first threshold distance is shown as distance (a) in Figure 6, where a = $R_V$ + $R_H$. As described below, based on an angle ($\theta$) between vehicle #1 and the hazard location, the heading of vehicle #1 as indicated by arrow 115a, the distance (D) between the vehicle #1 and the location of the hazard, and the first threshold distance (a), the distance (D') which vehicle #1 will travel before it likely encounters the hazard on its path may be determined.

Returning to Figure 5, the method 435 includes first determining 505 the angle ($\theta$) between the vehicle 100 and the location of the hazard. In one embodiment, the angle ($\theta$) is determined relative to an axis 620 aligned at true north. The angle ($\theta$) may be determined according to equations (4) through (7) below based on the GPS coordinates of the vehicle 100 ($\varphi_V$, $\lambda_V$) and the GPS coordinates of the hazard location ($\varphi_H$, $\lambda_H$), as defined above. In this example, the hazard location is deemed to be the same as the location of vehicle #2.

$$(4)\ \theta = \mathrm{atan2}(X, Y)$$

where

$$(5)\ X = \sin(\Delta\lambda) * \cos(\varphi_H),$$

and

$$(6)\ Y = \cos(\varphi_V) * \sin(\varphi_H) - \sin(\varphi_V) * \cos(\varphi_H) * \cos(\Delta\lambda)$$

$$(7)\ \text{and if } \theta < 0,\ set\ \theta = \theta + 2\pi$$

Based on the angle ($\theta$), the MAS controller 200 determines 510 whether the hazard location is on the path that the vehicle 100 is travelling. Depending on the angle (A) between the hazard location and the vehicle 100, and the vehicle heading, the hazard location may be near the vehicle 100 but it may not be on the path or encountered by the vehicle 100. This determination may be made based on equations (8) through (11) set out below to determine angles A, B and C shown in Figure 6. As noted above, D is the distance between the vehicle 100 and the hazard location; "a" is the first threshold distance (equaling $R_V$ + $R_H$) at which the vehicle 100 will encounter the hazard location if it continues at its current heading ($H_V$) relative to axis 620.

$$(8)\ \ A = |Hv - \theta|$$

$$(9)\ \ \text{and if } A < \pi,\ set\ A = |A - 2\pi|$$

$$(10)\ B = \pi - \mathrm{asin}(D * \frac{\sin A}{a}),$$

and

$$(11)\ C = \pi - A - B$$

In some embodiments, based on the results of A, B, and C, if B is not real, or if C is less than zero, the MAS controller 200 determines that the hazard location is not on the current path of vehicle #1. The method may end with this determination without setting the AWD state to connect. The MAS controller 200 may continue to step 405 to process the next message. If the hazard location is on the current path of vehicle #1, the MAS controller 200 determines the time for the vehicle #1 to reach the hazard location. In some embodiments, the MAS controller 200 may determine 515 whether the hazard location is directly ahead of the vehicle 100, as indicated by angle (A) equaling zero, or a very small angle. If the hazard location is directly ahead of the vehicle #1, the distance (D') that the vehicle 100 will travel on its path before encountering the hazard location is determined 520 as the distance (D) between the vehicle and the hazard location minus the sum of $R_V$ and $R_H$ (a). If the hazard location is not directly ahead of the vehicle #1, the distance (D') that the vehicle 100 will travel on its path before encountering the hazard location is determined 525 according to equation (12) below.

$$(12) \quad D' = a * \frac{\sin C}{\sin A}$$

Finally, the time for the vehicle 100 to travel before encountering the hazard location is determined 530 based the distance (D') divided by the vehicle speed. The method returns to the action 440 illustrated in Figure 4 for the MAS controller 200 to determine 440 whether the time to encounter the hazard location is less than the first threshold time.

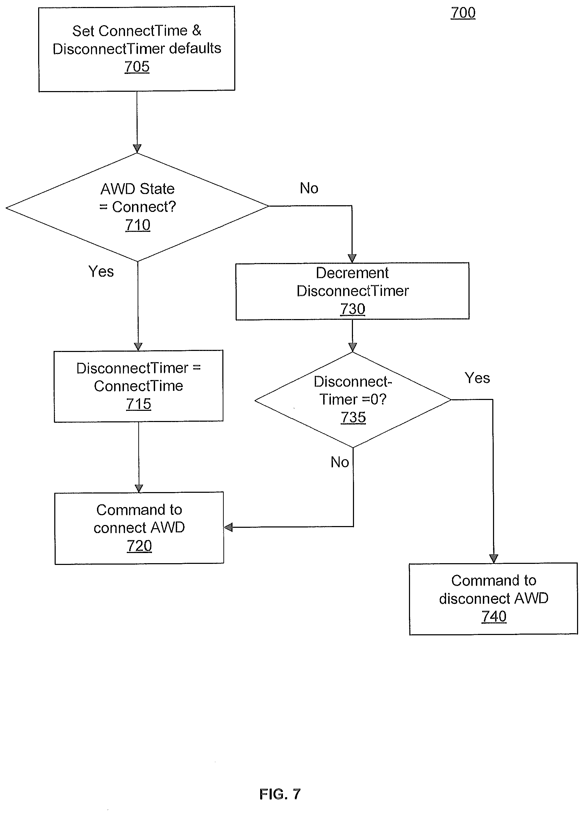

The method 400 may be performed periodically, for example every 100ms, to process each message received and stored by the MAS controller 200. Figure 7 illustrates a method 700 for the MAS controller 200 or vehicle supervisory controller 230 to command the connection or disconnection of the AWD driveline assembly based on the AWD state. The method 700 also may be performed periodically, for example every 100ms. The method 700 includes setting 705 default values for a ConnectTime and a DisconnectTimer. The ConnectTime corresponds to a minimum time that the AWD driveline assembly should remain actuated. The DisconnectTimer corresponds to the time after which the AWD driveline assembly should be disconnected if no new messages are processed which indicate the connection of the AWD assembly is warranted. These default values for the ConnectTime and DisconnectTimer may or may not correspond to the first threshold time described above.

The AWD state determined by method 400 is checked 710 and if this state indicates a CONNECT state, the DisconnectTimer is reset 715 to the value of the ConnectTime. A command is issued 720 in order to put or maintain the AWD driveline assembly in a connected or actuated state.

If the AWD state is a DISCONNECT state, the DisconnectTimer is decremented by a value dT, which for example, may be set to 0.1 seconds. The DisconnectTimer may be set to a value such as Max(DisconnectTimer-dT,0). If the MAS controller 200 or vehicle supervisory controller 230 determines 735 that the DisconnectTimer has reached zero, a command is issued 740 in order to disconnect components in the AWD driveline assembly. Otherwise, the command is issued 720 in order to put or maintain the AWD driveline assembly in a connected or actuated state. In some embodiments, the vehicle supervisory controller 230 may make a final determination regarding the AWD state based on the DisconnectTimer and method 700, as well as other conditions or information received by the vehicle supervisory controller 230 from other components and sensors in the vehicle.

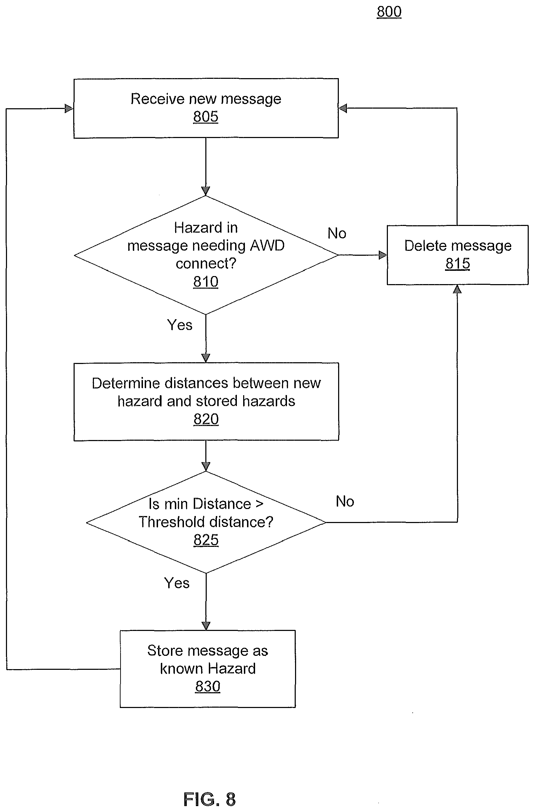

As described above, the method 400 to determine the AWD state for the vehicle 100 may be performed for each message received by the vehicle 100 from another vehicle or structure or from one or more wireless communications networks 110. In one embodiment, each received message is examined according to the method 800 illustrated in Figure 8. If the received message provides an indication of a new AWD trigger and hazard location, it may be stored by the MAS controller 200, such as in a buffer in memory 310. The method 400 thus may be run periodically and repeated for each unique hazard location.

The method 800 starts with the vehicle 100 and MAS controller receiving 805 a new message. The new message is examined 810 to determine whether it contains an AWD trigger, i.e. information that may indicate a scenario or hazard for which actuation of the AWD assembly may be beneficial for the operation of the vehicle. In one embodiment, the AWD trigger information may be encoded in pre-assigned bit fields with a value "1" indicating the presence of an AWD trigger and a value "0" indicating no AWD trigger. The bit values may be OR-d together such that if any one or more AWD triggers are present, the method 800 continues. If no AWD trigger is present, the message may be deleted 815. The method continues with the receipt of the next new message.

If the new message includes an AWD trigger, distances are calculated 820 between the location of the new hazard associated with the new message and the locations of hazards stored in the buffer. Distances may be determined based on a GPS location contained in the new message and GPS locations for the existing or known hazards stored in the buffer. The distances may be calculated based on equations similar to equations (1), (2), and (3) described above but using the latitude and longitude of the new hazard location and a stored or known hazard location.

From the calculated distances, a minimum distance is determined. The MAS controller 200 compares 825 the minimum distance with a second threshold distance. If the minimum distance is greater than the threshold, this indicates that the hazard location is not already represented by a previously received message and known hazard stored in the buffer. As a result, the hazard location is stored 830 in the buffer as a known hazard location. The MAS controller 200 may store the complete message, selected fields or data from the message, or just the known hazard location. Otherwise, if the minimum distance is less than the second threshold distance, this indicates that the hazard location is already represented by a previously received message and known hazard location stored in the buffer. In that case, the message is deleted 815. Thus, rather than executing the method 400 to examine every message or every message including the presence of an AWD trigger, the MAS controller 230 may eliminate some received messages in order to reduce the processing time for the method 400. In some embodiments, the second threshold distance also may be set to the same value as the first threshold distance, which may be based on the margin of error in determining locations based on GPS coordinates.

The invention has been described in an illustrative manner, and it is to be understood that the terminology, which has been used, is intended to be in the nature of words of description rather than of limitation. Many modifications and variations of the present invention are possible in light of the above teachings. It is, therefore, to be understood that within the scope of the appended claims, the invention may be practiced other than as specifically described.

**Claims**

1.  A method for determining a connection state of an all wheel drive (AWD) assembly in a vehicle (100), the method comprising:

    receiving by a vehicle (100), a message indicative of a hazard and a hazard location;
    determining a distance to the hazard location from the vehicle (100);
    in response to the distance to the hazard location being below a first threshold distance, setting an all wheel drive (AWD) state for an AWD assembly in the vehicle (100) to a connect state;
    in response to the distance to the hazard location being above the first threshold, determining a time to the hazard location for the vehicle (100); and
    in response to the time to the hazard location being below a threshold AWD connection time, setting the AWD state to the connect state.

2.  The method of claim 1 wherein determining the time to the hazard location comprises:

    determining whether the hazard location is on a path of the vehicle (100); and
    in response to the hazard location being on the path of the vehicle (100), determining the time to the hazard location based on vehicle (100) speed and a distance on the path of the vehicle (100) to the hazard location.

3.  The method of claim 2 further comprising determining the distance on the path of the vehicle (100) to the hazard location based on an angle between a heading of the vehicle (100) and the hazard location, the distance to the hazard location from the vehicle (100), and the first threshold distance.

4.  The method of claim 1 wherein receiving the message indicative of the hazard comprises receiving messages from one or more other vehicles (100), one or more roadway structures, one or more wireless networks (110), or a combination thereof.

5.  The method of claim 1 wherein,

    receiving the message indicative of the hazard comprises:

        receiving one or more new messages;
        determining whether each new received message contains information indicative of a hazard;
        for each new received message containing information indicative of a hazard, determining a minimum distance between the hazard location of the new received message and hazard locations stored by the vehicle (100) for one or more known hazards; and
        in response to the minimum distance being greater than a second threshold distance, storing the hazard location of the new message as a known hazard location;

    and wherein, determining the distance to the hazard location from the vehicle (100) comprises determining the distance to the known hazard location.

6. The method of claim 1 wherein

the hazard location comprises global positioning system (GPS) coordinates of the hazard location, GPS coordinates of another vehicle (100) sending the message indicative of the hazard, or GPS coordinates of a roadway structure sending the message indicative of the hazard; and/or
wherein the message comprises an indicator of a wheel slip event in another vehicle (100), a yaw event in another vehicle (100), an anti-lock braking system (ABS) event in another vehicle (100), a connected or locked AWD state in another vehicle (100), an accelerator pedal event in another vehicle (100), a steep road grade, a rough road condition, a coefficient of friction for the road, a gravel road, a dirt road, a sharp curvature of the road, an icy road condition, a snowy road condition, a wet road condition, or a combination thereof; and/or
wherein the message comprises a dedicated short range communication (DSRC) message; and/or
further comprising activating a connection of the AWD assembly based on the AWD state being set to the connect state; and/or
further comprising activating the connection of the AWD assembly based on the AWD state being set to the connect state and information received from one or more sensors in the vehicle (100).

7. A controller (200) for determining a connection state of all wheel drive assembly in a vehicle (100), the controller comprising :

a memory (310);
a wireless communications subsystem (320); and
a processor (305) configured to:

receive a message indicative of a hazard and a hazard location through the wireless communications subsystem (320);
determine a distance to the hazard location from the vehicle (100);
in response to the distance to the hazard location being below a first threshold distance, set an all wheel drive (AWD) state for an AWD assembly in the vehicle (100) to a connect state;
in response to the distance to the hazard location being above the first threshold, determine a time to the hazard location for the vehicle (100); and
in response to the time to the hazard location being below a threshold AWD connection time, set the AWD state to the connect state.

8. The controller (200) of claim 7 wherein the processor (305) is further configured to determine the time to the hazard location by:

determining whether the hazard location is on a path of the vehicle (100); and
in response to the hazard location being on the path of the vehicle (100), determining the time to the hazard location based on vehicle (100) speed and a distance on the path of the vehicle (100) to the hazard location.

9. The controller (200) of claim 8 wherein the processor (305) is further configured to determine the distance on the path of the vehicle (100) to the hazard location based on an angle between a heading of the vehicle (100) and the hazard location, the distance to the hazard location from the vehicle (100), and the first threshold distance.

10. The controller (200) of claim 8 wherein the processor (305) is further configured to:

receive one or more new messages through the wireless communications subsystem (320); determine whether each new received message contains information indicative of a hazard;
for each new received message containing information indicative of a hazard, determine a minimum distance between the hazard location of the new received message and hazard locations stored by the controller (200) for one or more known hazards; and
in response to the minimum distance being greater than a second threshold distance, store the hazard location of the new message as a known hazard location in the memory (310);
and, determine the distance to the hazard location from the vehicle (100) by determining the distance to the known hazard location.

11. The controller (200) of claim 8 wherein the hazard location comprises global positioning system (GPS) coordinates of the hazard location, GPS coordinates of another vehicle (100) sending the message indicative of the hazard, or GPS coordinates of a roadway structure sending the message indicative of the hazard.

**12.** The controller (200) of claim 8 wherein the message comprises an indicator of a wheel slip event in another vehicle (100), a yaw event in another vehicle (100), an anti-lock braking system (ABS) event in another vehicle (100), a connected or locked AWD state in another vehicle (100), an accelerator pedal event in another vehicle (100), a steep road grade, a rough road condition, a coefficient of friction for the road, a gravel road, a dirt road, a sharp curvature of the road, an icy road condition, a snowy road condition, a wet road condition, or a combination thereof.

**13.** The controller (200) of claim 8 wherein the wireless communications subsystem (320) is configured to receive dedicated short range communication (DSRC) messages.

**14.** The controller (200) of claim 8 wherein the processor (305) is further configured to activate a connection of the AWD assembly based on the AWD state being set to the connect state.

**15.** The controller (200) of claim 8 wherein the processor (305) is further configured to activate the connection of the AWD assembly based on the AWD state being set to the connect state and information received by The controller (200) from one or more sensors in the vehicle (100).

**Patentansprüche**

**1.** Verfahren zum Bestimmen eines Verbindungszustands einer Allradantriebsanordnung (AWD) in einem Fahrzeug (100), wobei das Verfahren umfasst:

Empfang einer Nachricht durch ein Fahrzeug (100), die auf eine Gefahr und eine Gefahrenstelle hinweist,
Bestimmung der Entfernung des Fahrzeugs (100) zur Gefahrenstelle,
Versetzen, als Reaktion darauf, dass der Abstand zu der Gefahrenstelle unter einem ersten Schwellenabstand liegt, eines Allradantriebszustands (AWD) für eine AWD-Anordnung in dem Fahrzeug (100) in einen Verbindungszustand,
als Reaktion darauf, dass die Entfernung zur Gefahrenstelle über dem ersten Schwellenwert liegt, Bestimmen einer Zeit bis zur Gefahrenstelle für das Fahrzeug (100), und
als Reaktion darauf, dass die Zeit bis zur Gefahrenstelle unter einem Schwellenwert für die AWD-Verbindungszeit liegt, Versetzen des AWD-Zustands in den Verbindungszustand.

**2.** Verfahren nach Anspruch 1, wobei die Bestimmung der Zeit bis zur Gefahrenstelle umfasst:

Bestimmen, ob die Gefahrenstelle auf einem Weg des Fahrzeugs (100) liegt, und
als Reaktion darauf, dass die Gefahrenstelle auf dem Weg des Fahrzeugs (100) liegt, Bestimmen der Zeit bis zur Gefahrenstelle auf der Grundlage der Geschwindigkeit des Fahrzeugs (100) und einer Entfernung auf dem Weg des Fahrzeugs (100) zur Gefahrenstelle.

**3.** Verfahren nach Anspruch 2 mit ferner der Bestimmung der Entfernung auf dem Weg des Fahrzeugs (100) zur Gefahrenstelle auf der Grundlage eines Winkels zwischen einem Kurs des Fahrzeugs (100) und der Gefahrenstelle, der Entfernung des Fahrzeugs (100) zur Gefahrenstelle und der ersten Schwellenentfernung.

**4.** Verfahren nach Anspruch 1, wobei der Empfang der die Gefahr anzeigenden Nachricht den Empfang von Nachrichten von einem oder mehreren anderen Fahrzeugen (100), einer oder mehreren Fahrbahnstrukturen, einem oder mehreren drahtlosen Netzwerken (110) oder einer Kombination davon umfasst.

**5.** Verfahren nach Anspruch 1, wobei,

das Empfangen der auf die Gefahr hinweisenden Nachricht umfasst:

Empfang einer oder mehrerer neuer Nachrichten, Feststellung, ob jede neu empfangene Nachricht Informationen enthält, die auf eine Gefahr hindeuten,
für jede neu empfangene Nachricht, die Informationen enthält, die auf eine Gefahr hinweisen, Bestimmen eines Mindestabstands zwischen der Gefahrenstelle der neu empfangenen Nachricht und von Gefahrenstellen, die von dem Fahrzeug (100) für eine oder mehrere bekannte Gefahren gespeichert sind, und

als Reaktion darauf, dass der Mindestabstand größer als ein zweiter Schwellenabstand ist, die Gefahrenstelle der neuen Meldung als Bekannte Gefahrenstelle zu speichern,

und wobei die Bestimmung der Entfernung zur Gefahrenstelle vom Fahrzeug (100) die Bestimmung der Entfernung zur bekannten Gefahrenstelle umfasst.

6. Verfahren nach Anspruch 1, bei dem

die Gefahrenstelle die GPS-Koordinaten der Gefahrenstelle, die GPS-Koordinaten eines anderen Fahrzeugs (100), das die die Gefahr anzeigende Nachricht sendet, oder die GPS-Koordinaten einer Fahrbahnstruktur, die die die Gefahr anzeigende Nachricht sendet, umfasst, und/oder
wobei die Nachricht einen Indikator für ein Radschlupfereignis in einem anderen Fahrzeug (100), ein Gierereignis in einem anderen Fahrzeug (100), ein ABS-Ereignis (Antiblockiersystem) in einem anderen Fahrzeug (100), einen angeschlossenen oder blockierten AWD-Zustand in einem anderen Fahrzeug (100), ein Gaspedalereignis in einem anderen Fahrzeug (100), eine steile Straßenneigung, einen rauen Straßenzustand, einen Reibungskoeffizienten für die Straße, eine Schotterstraße, eine unbefestigte Straße, eine scharfe Krümmung der Straße, einen vereisten Straßenzustand, einen verschneiten Straßenzustand, einen nassen Straßenzustand oder eine Kombination davon umfasst und/oder
wobei die Nachricht eine DSRC-Nachricht (dedicated short range communication) umfasst und/oder
ferner das Aktivieren einer Verbindung der AWD-Anordnung auf der Grundlage, dass der AWD-Zustand auf den Verbindungszustand eingestellt ist, und/oder
ferner das Aktivieren der Verbindung der AWD-Anordnung auf der Grundlage des AWD-Zustands, der auf den Verbindungszustand eingestellt ist, und der von einem oder mehreren Sensoren im Fahrzeug (100) empfangenen Informationen.

7. Controller (200) zum Bestimmen eines Verbindungszustands einer Allradantriebsanordnung in einem Fahrzeug (100), wobei der Controller umfasst:

einen Speicher (310),
ein drahtloses Kommunikations-Untersystem (320), und
einen Prozessor (305), der dafür konfiguriert ist:

über das drahtlose Kommunikations-Untersystem (320) eine Nachricht zu empfangen, die auf eine Gefahr und eine Gefahrenstelle hinweist,
Bestimmung der Entfernung des Fahrzeugs (100) zur Gefahrenstelle,
als Reaktion darauf, dass der Abstand zur Gefahrenstelle unter einem ersten Schwellenwert liegt, einen Allradantriebszustand (AWD) für eine AWD-Anordnung im Fahrzeug (100) auf einen Verbindungszustand einzustellen,
als Reaktion darauf, dass die Entfernung zur Gefahrenstelle über dem ersten Schwellenwert liegt, eine Zeit bis zur Gefahrenstelle für das Fahrzeug (100) zu bestimmen und
als Reaktion darauf, dass die Zeit bis zur Gefahrenstelle unter einem Schwellenwert für die AWD-Verbindungszeit liegt, den AWD-Zustand auf den Verbindungszustand einzustellen.

8. Controller (200) nach Anspruch 7, wobei der Prozessor (305) ferner so konfiguriert ist, dass er die Zeit bis zur Gefahrenstelle bestimmt durch:

Bestimmen, ob die Gefahrenstelle auf einem Weg des Fahrzeugs (100) liegt, und
als Reaktion darauf, dass die Gefahrenstelle auf dem Weg des Fahrzeugs (100) liegt, Bestimmen der Zeit bis zur Gefahrenstelle auf der Grundlage der Geschwindigkeit des Fahrzeugs (100) und einer Entfernung auf dem Weg des Fahrzeugs (100) zur Gefahrenstelle.

9. Controller (200) nach Anspruch 8, wobei der Prozessor (305) ferner so konfiguriert ist, dass er die Entfernung auf dem Weg des Fahrzeugs (100) zu der Gefahrenstelle auf der Grundlage eines Winkels zwischen einem Kurs des Fahrzeugs (100) und der Gefahrenstelle, der Entfernung zu der Gefahrenstelle von dem Fahrzeug (100) und der ersten Schwellenentfernung bestimmt.

10. Controller (200) nach Anspruch 8, wobei der Prozessor (305) ferner dazu konfiguriert ist:

eine oder mehrere neue Nachrichten über das drahtlose Kommunikations-Untersystem (320) zu empfangen, festzustellen, ob jede neu empfangene Nachricht Informationen enthält, die auf eine Gefahr hinweisen, für jede neu empfangene Nachricht, die Informationen enthält, die auf eine Gefahr hinweisen, einen Mindestabstand zwischen der Gefahrenstelle der neu empfangenen Nachricht und Gefahrenstellen, die von dem Controller (200) für eine oder mehrere bekannte Gefahren gespeichert sind, zu bestimmen, und als Reaktion darauf, dass der Mindestabstand größer als ein zweiter Schwellenabstand ist, die Gefahrenstelle der neuen Meldung als bekannte Gefahrenstelle im Speicher (310) speichern, und die Entfernung zur Gefahrenstelle vom Fahrzeug (100) durch Bestimmung der Entfernung zur bekannten Gefahrenstelle festzustellen.

**11.** Controller (200) nach Anspruch 8, wobei die Gefahrenstelle die GPS-Koordinaten der Gefahrenstelle, die GPS-Koordinaten eines anderen Fahrzeugs (100), das die auf die Gefahr hinweisende Nachricht sendet, oder die GPS-Koordinaten einer Fahrbahnstruktur, die die auf die Gefahr hinweisende Nachricht sendet, umfasst.

**12.** Controller (200) nach Anspruch 8, wobei die Nachricht einen Indikator für ein Radschlupfereignis bei einem anderen Fahrzeug (100), ein Gierereignis bei einem anderen Fahrzeug (100), ein Antiblockiersystem(ABS)-Ereignis in einem anderen Fahrzeug (100), einen angeschlossenen oder blockierten AWD-Zustand in einem anderen Fahrzeug (100), ein Gaspedalereignis in einem anderen Fahrzeug (100), eine steile Straßenneigung, einen rauen Straßenzustand, einen Reibungskoeffizienten für die Straße, eine Schotterstraße, eine unbefestigte Straße, eine scharfe Krümmung der Straße, einen vereisten Straßenzustand, einen verschneiter Straßenzustand, einen nassen Straßenzustand oder eine Kombination davon umfasst.

**13.** Controller (200) nach Anspruch 8, wobei das drahtlose Kommunikations-Untersystem (320) so konfiguriert ist, dass es DSRC-Nachrichten (dedicated short range communication) empfängt.

**14.** Controller (200) nach Anspruch 8, wobei der Prozessor (305) ferner so konfiguriert ist, dass er eine Verbindung der AWD-Anordnung aktiviert, wenn der AWD-Zustand auf den Verbindungszustand eingestellt ist.

**15.** Controller (200) nach Anspruch 8, wobei der Prozessor (305) ferner so konfiguriert ist, dass er die Verbindung der AWD-Anordnung auf der Grundlage des AWD-Zustands, der auf den Verbindungszustand eingestellt ist, und der von dem Controller (200) von einem oder mehreren Sensoren in dem Fahrzeug (100) empfangenen Informationen aktiviert.

## Revendications

**1.** Procédé pour déterminer un état de connexion d'un assemblage de transmission intégrale (AWD) dans un véhicule (100), le procédé comprenant les étapes consistant à :

recevoir, via un véhicule (100), un message indicateur d'un danger et d'un endroit dangereux ;
déterminer une distance jusqu'à l'endroit dangereux depuis le véhicule (100) ;
en réponse au fait que la distance jusqu'à l'endroit dangereux est en dessous d'une première distance seuil, fixer un état de transmission intégrale (AWD) pour un assemblage AWD dans le véhicule (100) à un état connecté ;
en réponse au fait que la distance jusqu'à l'endroit dangereux est au-dessus du premier seuil, déterminer un temps jusqu'à l'endroit dangereux pour le véhicule (100) ; et
en réponse au fait que le temps jusqu'à l'endroit dangereux est en dessous d'un temps de connexion AWD seuil, fixer l'état AWD à l'état connecté.

**2.** Procédé selon la revendication 1, dans lequel l'étape consistant à déterminer le temps jusqu'à l'endroit dangereux comprend les opérations consistant à :

déterminer si l'endroit dangereux est sur une trajectoire du véhicule (100) ; et
en réponse au fait que l'endroit dangereux est sur la trajectoire du véhicule (100), déterminer le temps jusqu'à l'endroit dangereux sur la base d'une vitesse du véhicule (100) et d'une distance sur la trajectoire du véhicule (100) jusqu'à l'endroit dangereux.

**3.** Procédé selon la revendication 2, comprenant en outre l'opération consistant à déterminer la distance sur la trajectoire du véhicule (100) jusqu'à l'endroit dangereux sur la base d'un angle entre l'avant du véhicule (100) et l'endroit dangereux, de la distance jusqu'à l'endroit dangereux depuis le véhicule (100), et de la première distance seuil.

4. Procédé selon la revendication 1, dans lequel l'étape consistant à recevoir le message indicateur du danger comprend l'opération consistant à recevoir des messages depuis un ou plusieurs autres véhicules (100), une ou plusieurs structures routières, un ou plusieurs réseaux sans fil (110), ou une combinaison de ceux-ci.

5. Procédé selon la revendication 1, dans lequel
les étapes consistant à recevoir le message indicateur du danger comprend les étapes consistant à :

   recevoir un ou plusieurs nouveaux messages ;
   déterminer si chaque nouveau message reçu contient une information indicatrice d'un danger ;
   pour chaque nouveau message reçu contenant une information indicatrice d'un danger, déterminer une distance minimum entre l'endroit dangereux du nouveau message reçu et des endroits dangereux stockés par le véhicule (100) pour un ou plusieurs dangers connus ; et
   en réponse au fait que la distance minimum est plus grande qu'une seconde distance seuil, stocker l'endroit dangereux du nouveau message à titre d'endroit dangereux connu ;
   et dans lequel, l'étape consistant à déterminer la distance jusqu'à l'endroit dangereux depuis le véhicule (100) comprend l'opération consistant à déterminer la distance jusqu'à l'endroit dangereux connu.

6. Procédé selon la revendication 1, dans lequel

   l'endroit dangereux comprend des coordonnées d'un système de positionnement global (GPS) de l'endroit dangereux, des coordonnées GPS d'un autre véhicule (100) envoyant le message indicateur du danger, ou des coordonnées GPS d'une structure routière envoyant le message indicateur du danger ; et/ou
   dans lequel le message comprend un indicateur d'un événement de glissement de roues dans un autre véhicule (100), un événement d'embardée dans un autre véhicule (100), un événement de système de freinage anti-blocage des roues (ABS) dans un autre véhicule (100), un état AWD connecté ou verrouillé dans un autre véhicule (100), un événement de pédale d'accélérateur dans un autre véhicule (100), un degré de route en pente, une condition routière de rugosité, un coefficient de frottement pour la route, une route en gravier, une route en terre, une courbure prononcée de la route, une condition de route verglacée, une condition de route enneigée, une condition de route mouillée, ou une combinaison de ceux-ci ; et/ou
   dans lequel le message comprend un message de communication dédiée à courte portée (DSRC) ; et/ou
   comprend en outre l'activation d'une connexion de l'assemblage AWD sur la base de l'état AWD qui est fixé à l'état connecté ; et/ou
   comprenant en outre l'activation de la connexion de l'assemblage AWD sur la base de l'état AWD qui est fixé à l'état connecté et d'une information reçue depuis un ou plusieurs capteurs dans le véhicule (100).

7. Contrôleur (200) destiné à déterminer un état de connexion d'un assemblage de transmission intégrale dans un véhicule (100), le contrôleur comprenant :

   une mémoire (310) ;
   un sous-système de communications sans fil (320) ; et
   un processeur (305) configuré pour :

      recevoir un message indicateur d'un danger et d'un endroit dangereux via le sous-système de communications sans fil (320) ;
      déterminer une distance jusqu'à l'endroit dangereux depuis le véhicule (100) ;
      en réponse au fait que la distance jusqu'à l'endroit dangereux est en dessous d'une première distance seuil, fixer un état de transmission intégrale (AWD) pour un assemblage AWD dans le véhicule (100) à un état connecté ;
      en réponse au fait que la distance jusqu'à l'endroit dangereux est au-dessus du premier seuil, déterminer un temps jusqu'à l'endroit dangereux pour le véhicule (100) ; et
      en réponse au fait que le temps jusqu'à l'endroit dangereux est en dessous d'un temps de connexion AWD seuil, fixer l'état AWD à l'état connecté.

8. Contrôleur (200) selon la revendication 7, dans lequel le processeur (305) est en outre configuré pour déterminer le temps jusqu'à l'endroit dangereux en :

déterminant si l'endroit dangereux est sur une trajectoire du véhicule (100) ; et

en réponse au fait que l'endroit dangereux est sur la trajectoire du véhicule (100), déterminer le temps jusqu'à l'endroit dangereux sur la base d'une vitesse du véhicule (100) et d'une distance sur la trajectoire du véhicule (100) jusqu'à l'endroit dangereux.

9. Contrôleur (200) selon la revendication 8, dans lequel le processeur (305) est en outre configuré pour déterminer la distance sur la trajectoire du véhicule (100) jusqu'à l'endroit dangereux sur la base d'un angle entre l'avant du véhicule (100) et l'endroit dangereux, de la distance jusqu'à l'endroit dangereux depuis le véhicule (100), et de la première distance seuil.

10. Contrôleur (200) selon la revendication 8, dans lequel le processeur (305) est en outre configuré pour :

recevoir un ou plusieurs nouveaux messages via le sous-système de communications sans fil (320) ;

déterminer si chaque nouveau message reçu contient une information indicatrice d'un danger ;

pour chaque nouveau message reçu contenant une information indicatrice d'un danger, déterminer une distance minimum entre l'endroit dangereux du nouveau message reçu et des endroits dangereux stockés par le contrôleur (200) pour un ou plusieurs dangers connus ; et

en réponse au fait que la distance minimum est plus grande qu'une seconde distance seuil, stocker l'endroit dangereux du nouveau message à titre d'endroit dangereux connu dans la mémoire (310) ;

et, déterminer la distance jusqu'à l'endroit dangereux depuis le véhicule (100) en déterminant la distance jusqu'à l'endroit dangereux connu.

11. Contrôleur (200) selon la revendication 8, dans lequel l'endroit dangereux comprend des coordonnées d'un système de positionnement global (GPS) de l'endroit dangereux, des coordonnées GPS d'un autre véhicule (100) envoyant le message indicateur du danger, ou des coordonnées GPS d'une structure routière envoyant le message indicateur du danger.

12. Contrôleur (200) selon la revendication 8, dans lequel le message comprend un indicateur d'un événement de glissement de roues dans un autre véhicule (100), un événement d'embardée dans un autre véhicule (100), un événement de système de freinage anti-blocage des roues (ABS) dans un autre véhicule (100), un état AWD connecté ou verrouillé dans un autre véhicule (100), un événement de pédale d'accélérateur dans un autre véhicule (100), un degré de route en pente, une condition routière de rugosité, un coefficient de frottement pour la route, une route en gravier, une route en terre, une courbure prononcée de la route, une condition de route verglacée, une condition de route enneigée, une condition de route mouillée, ou une combinaison de ceux-ci.

13. Contrôleur (200) selon la revendication 8, dans lequel le sous-système de communications sans fil (320) est configuré pour recevoir des messages de communication dédiée à courte portée (DSRC).

14. Contrôleur (200) selon la revendication 8, dans lequel le processeur (305) est en outre configuré pour activer une connexion de l'assemblage AWD sur la base de l'état AWD qui est fixé à l'état connecté.

15. Contrôleur (200) selon la revendication 8, dans lequel le processeur (305) est en outre configuré pour activer la connexion de l'assemblage AWD sur la base de l'état AWD qui est fixé à l'état connecté et d'une information reçue par le contrôleur (200) depuis un ou plusieurs capteurs dans le véhicule (100).

FIG.1

FIG. 2

MAS Controller
200

Processor
305

Memory
310

V2I Wireless
Comm. Subsystem
315

Wireless Comm.
Subsystem
320

Vehicle Supervisory Controller
230

CAN Bus 330

Driveline
Controller 340

FIG. 3

FIG. 4

Determine Time
to Hazard
435

Determine angle between
Vehicle and Hazard
505

Is Hazard on
Vehicle Path?
510

No → Return to 405

Yes

Is Hazard straight
ahead?
515

Yes

No

Determine distance
to Hazard
520

Determine distance
to Hazard with angle
525

Time to Hazard =
Distance (D') to travel /
Vehicle Speed
530

Return to
440

FIG. 5

FIG. 6

700

Set ConnectTime &
DisconnectTimer defaults
705

AWD State
= Connect?
710

No

Yes

Decrement
DisconnectTimer
730

DisconnectTimer =
ConnectTime
715

Disconnect-
Timer =0?
735

Yes

No

Command to
connect AWD
720

Command to
disconnect AWD
740

FIG. 7

800

```
          ┌─────────────────────────────┐
      ┌──▶│     Receive new message     │◀──┐
      │   │            805              │   │
      │   └─────────────┬───────────────┘   │
      │                 │                   │
      │                 ▼                   │
      │            ╱─────────╲              │
      │          ╱  Hazard in  ╲    No      │
      │        ◀  message needing AWD ──────┼──▶┌──────────────────┐
      │          ╲  connect?   ╱            │   │  Delete message  │
      │            ╲   810   ╱              │   │       815        │
      │            ╲─────────╱              │   └──────────────────┘
      │                 │                   │            ▲
      │                Yes                  │            │
      │                 ▼                   │            │
      │   ┌─────────────────────────────┐   │            │
      │   │ Determine distances between new │ │          │
      │   │   hazard and stored hazards  │   │            │
      │   │            820              │   │            │
      │   └─────────────┬───────────────┘   │            │
      │                 │                   │            │
      │                 ▼                   │            │
      │            ╱─────────╲              │            │
      │          ╱ Is min Distance > ╲  No  │            │
      │        ◀  Threshold distance? ──────┘────────────┘
      │          ╲     825    ╱
      │            ╲─────────╱
      │                 │
      │                Yes
      │                 ▼
      │   ┌─────────────────────────────┐
      │   │      Store message as       │
      └───│       known Hazard          │
          │            830              │
          └─────────────────────────────┘
```

FIG. 8

**EP 3 452 349 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8095287 B
- US 2013274952 A

- DE 102011116112 A